# DEMANDE DE BREVET EUROPEEN

(11) **EP 1 764 322 A2**
(43) Date de publication de la demande: **21.03.2007**
(21) Numéro de dépôt: 06360043.1
(22) Date de dépôt: 18.09.2006
(51) Int. Cl.: B65G 69/28

(54) **Niveleur de quai et utilisation**

(30) Priorité: 19.09.2005 FR 0509560; 21.10.2005 FR 0510757
(71) Demandeur: Roere, Michel, 67720 Weyersheim (FR)
(72) Inventeur: Roere, Michel, 67720 Weyersheim (FR)
(74) Mandataire: Munier, Laurent

(57) **Abrégé**

Le niveleur (1) de quai (2) de l'invention incorpore dans sa structure métallique une barrière de sécurité et de protection adaptée aux chariots élévateurs. La barrière est un dispositif mobile (6) pouvant passer d'une position relevée à une position escamotée et situé à une portion d'extrémité (4) de la rampe (3) côté véhicule à charger. Ledit dispositif (6) comprenant une première face longitudinale plate (7) mobile de prolongation de la plate-forme et dudit quai (2) en position de travail ou chargement de véhicule. Le dispositif comprend encore une deuxième face longitudinale mobile (9,17) formant la barrière en position repos. L'actionnement du dispositif mobile (6) situé en portion d'extrémité (4) du niveleur (1) plaçant la deuxième face (9,17) en position de barrière anti-chute en position repos. Le déplacement en sens opposé de ladite portion d'extrémité (4) escamotant la deuxième face barrière (9,17) à l'intérieur du niveleur (1) et plaçant la première face plate (7) en prolongation du niveleur vers le plateau du véhicule en position travail.

## Description

La présente invention concerne la manutention de marchandises et le chargement dans des véhicules.

Elle se rapporte en premier lieu aux équipements de quais de chargement, notamment un niveleur de quai présentant une rampe basculable typiquement une rampe hydraulique avec plateforme de chargement. L'invention a pour objet une telle rampe hydraulique à lèvre mobile, basculante, télescopique ou rabattante.

Le transbordement des marchandises entre des magasins et des véhicules routiers pose généralement des problèmes. D'une part de liaison pour permettre l'accès des engins de manutention tels que diables, transpalettes manuels ou électriques, chariot élévateurs ou autres dans les véhicules. D'autre part, de dénivellation entre le niveau des quais et les plateaux des différents véhicules.

A cet effet, il existe plusieurs modèles de rampes de mise à niveau, dont les plus utilisées actuellement sont les rampes à mise en place automatique qui offrent le meilleur confort d'utilisation et les meilleures garanties sur le plan de la sécurité.

La rampe à lèvre mobile présentant une cinématique de fonctionnement suivant lequel la levée ou descente d'extrémité de la plateforme est assurée par un vérin hydraulique, dit vérin principal. Après travail dudit vérin principal soit arrivée en bout de course, la pression est dirigée vers un vérin de lèvre qui déplace ladite lèvre mobile afin de l'amener dans le prolongement de la plateforme et de la faire reposer sur le plancher du véhicule à charger ou décharger. Ainsi, le niveleur selon l'invention est un niveleur hydraulique. Des chariots élévateurs et autres engins de manutention circulent sur le niveleur. Ces engins sont amenés à manoeuvrer. Donc, tourner, pivoter, faire des marches arrières sur un quai de chargement ce qui conduit à un risque de chute ou de collision avec le volet de porte si le quai est fermé.

Pour éviter les accidents et former barrière en position repos et rampe de chargement en position travail, la rampe à lèvre mobile est articulée basculante et ladite rampe selon l'invention présente un dispositif mobile pouvant passer d'une position relevée à une position escamotée et situé à une portion d'extrémité de ladite rampe côté véhicule à charger, ledit dispositif comprenant une première face longitudinale plate mobile formant ladite lèvre de prolongation de la plate-forme et dudit quai en position de travail ou chargement de véhicule. Ladite première face longitudinale plate est liée par sa première extrémité à une deuxième face longitudinale mobile formant une barrière en positon repos. L'actionnement du dispositif mobile situé en portion d'extrémité du niveleur plaçant la deuxième face en position de barrière anti-chute en position repos, le déplacement en sens opposé de ladite portion d'extrémité escamote la deuxième face barrière à l'intérieur du niveleur et place la première face plate en prolongation du niveleur vers le plateau du véhicule en position travail.

Selon d'autres caractéristiques, du niveleur :
- ladite deuxième face longitudinale ou axiale suivant une portion de cylindre forme une barrière arrondie en positon repos. Ladite face plate est disposée confondue à une coupe longitudinale du cylindre théorique prolongeant la face partiellement cylindrique et passant par l'axe dudit cylindre. Le pivotement sur ledit axe de la portion d'extrémité du niveleur place la première face plate en position verticale de prolongation du quai de chargement et la face arrondie en position de barrière anti-chute en position repos. Le pivotement en sens opposé de ladite portion d'extrémité escamotant la face cylindrique barrière à l'intérieur du niveleur et place la première face plate en prolongation du niveleur vers le plateau du véhicule (position travail ou chargement).
- la deuxième face longitudinale ou axiale est plate et forme une barrière en positon repos relié pivotante à la première face plate par une charnière et une face plate intermédiaire.
- la rampe est constituée par au moins quatre panneaux reliés bout à bout par au moins trois charnières successives. Le panneau d'extrémité en position travail déploie l'ensemble des quatre panneaux à l'horizontal. La rentrée du panneau d'extrémité vers le quai relève la charnière centrale et les deux panneaux intermédiaires sous forme de barrière.
- Il incorpore une barrière escamotable et relevable automatiquement sous l'effet d'un vérin asservi à une chaîne de sécurité en particulier électrique avec par exemple détecteur sur porte et/ou cale de camion.
- Il incorpore une barrière escamotable relevable sous l'effet d'un vérin actionné par une commande indépendante.
- Il est réalisé en une structure métallique constituée de tôle et de profilés formant nervures.
L'invention concerne encore l'utilisation d'un niveleur présentant une rampe de chargement munie d'un dispositif escamotable conforme à l'une ou plusieurs des caractéristiques décrites ci-dessus pour former barrière de quai prévenant les chutes de chariot élévateur.

La présente invention sera mieux comprise au regard des dessins annexés sur lesquels :
- La figure 1 représente en élévation le niveleur formant barrière arrondie en position de repos.
- La figure 2 représente en élévation le niveleur de la Fig. 1 barrière escamotée en position travail.
- La figure 3 représente le niveleur de la Fig. 2 vue de deux tiers de face en élévation.
- La figure 4 représente le niveleur en position travail de la figure vue en coupe.
- La figure 5 représente, vue en coupe, le niveleur en positon repos des figures 2 et 3.
- La figure 6 représente, vue de côté en élévation, une variante de niveleur selon l'invention avec rampe à quatre panneaux et trois charnières successives en position travail.
- Les figures 7 et 8 représentent, en élévation, le niveleur de la figure 6 en position repos.
- La figure 9 représente le niveleur à quatre panneaux en position travail de la figure 6, vue en coupe.
- La figure 10 représente le niveleur à quatre panneaux en position repos des figures 7 et 8, vue en coupe.
- Les figures 11 à 16 représentent, en élévation, une rampe de niveleur selon l'invention incorporant une barrière escamotable vue en élévation.
- La figure 17 représente vue en coupe le niveleur des figures 11 à 16 en position travail, barrière escamotée.
- La figure 18 représente vue en coupe le niveleur des figures 16 en position repos, barrière relevée.

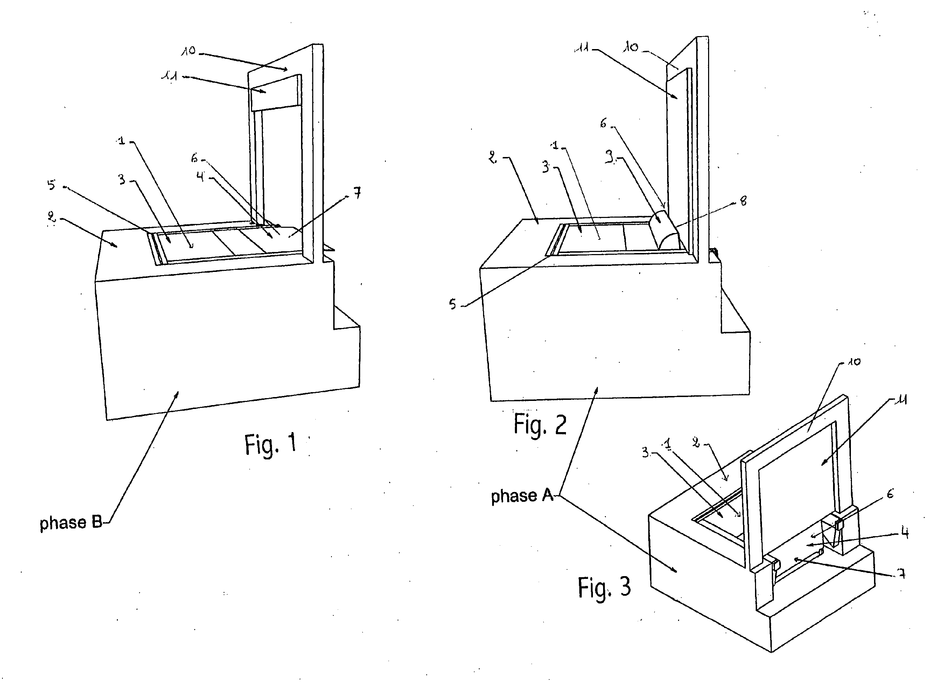

Le niveleur hydraulique 1 représenté sur la figure 1 est encastré dans un quai de chargement 2. Le niveleur 1 présente une première plate-forme métallique ou rampe 3 pour permettre aux engins de manutention, en particulier les chariots élévateurs, de rouler et d'atteindre la hauteur du plateau du véhicule à charger. Pour cela, la portion d'extrémité extérieure 4 de la rampe 3 vers le véhicule à charger est soulevée ou abaissée sous l'effet d'un vérin hydraulique non représenté car caché sous la structure et laissant la surface libre pour la circulation des chariots. L'autre extrémité comprend un axe de pivotement 5 parallèle au quai 2, ainsi la rampe 3 peut s'incliner en montant ou descendant par rapport à l'axe 5 et les chariots élévateurs peuvent toujours atteindre la hauteur du véhicule à charger. La portion d'extrémité extérieure 4 du niveleur 1 comprend de plus un dispositif pivotant 6 par rapport à la rampe 3 elle-même pivotante sur l'axe 5.

Ce dispositif 6 présente une face longitudinale plate 7 de prolongation de la rampe 3 et du quai 2 en position travail qui vient se poser sur le plateau du véhicule à charger. La face longitudinale plate 7 est liée par sa première extrémité 8 à une face longitudinale 9 ou axiale suivant une portion de cylindre formant une barrière arrondie en position repos (Fig. 2), la face plate étant disposée confondue à une coupe longitudinale du cylindre théorique prolongeant la face partiellement cylindrique et passant par l'axe dudit cylindre, le pivotement sur ledit axe de la portion d'extrémité 4 du niveleur 1 plaçant la face plate 7 en position verticale formant portion de face verticale du quai de chargement 2 descendant au sol (Fig. 3). Aussi, la face arrondie 9 est relevée en position de barrière anti-chute en position repos (Fig. 2). Le pivotement en sens opposé de ladite portion d'extrémité 4 escamotant la barrière 9 ou face cylindrique à l'intérieur du niveleur et remontant la face plate en prolongation du niveleur vers le plateau du véhicule en position travail (Fig. 1).

Le quai 2 représenté sur les figures 1 à 3 comprend une porte permettant le passage des chariots sur la rampe 3 en direction du véhicule à charger. Cette porte comprend un cadre 10 et un volet de fermeture 11 pouvant se rabattre verticalement vers le bas et fermant l'accès au quai 2.

Figure 1, le volet 11 est levé et la portion d'extrémité 4 de la rampe de chargement 3 en position travail dépasse de la porte en direction du véhicule. En position repos (Fig. 2 et 3) l'extrémité 4 est pivotée rabattue, la barrière résultant de la levée de la face arrondie 9 est formée et la face plate 7 se trouve en position verticale prolongeant le quai 2 et interdisant l'accès au mécanisme situé sous la rampe de chargement 3. La barrière empêche les chutes accidentelles des chariots de chargement et de plus le volet 11 de la porte est fermé ainsi le quai est totalement sécurisé.

La face 9 constitue une barrière escamotable de forme arrondie pour protéger les pieds des opérateurs. Pendant sa rotation elle crée un obstacle infranchissable par un chariot élévateur. Etant placée devant une porte sectionnale, elle va protéger les panneaux composant le volet 11.

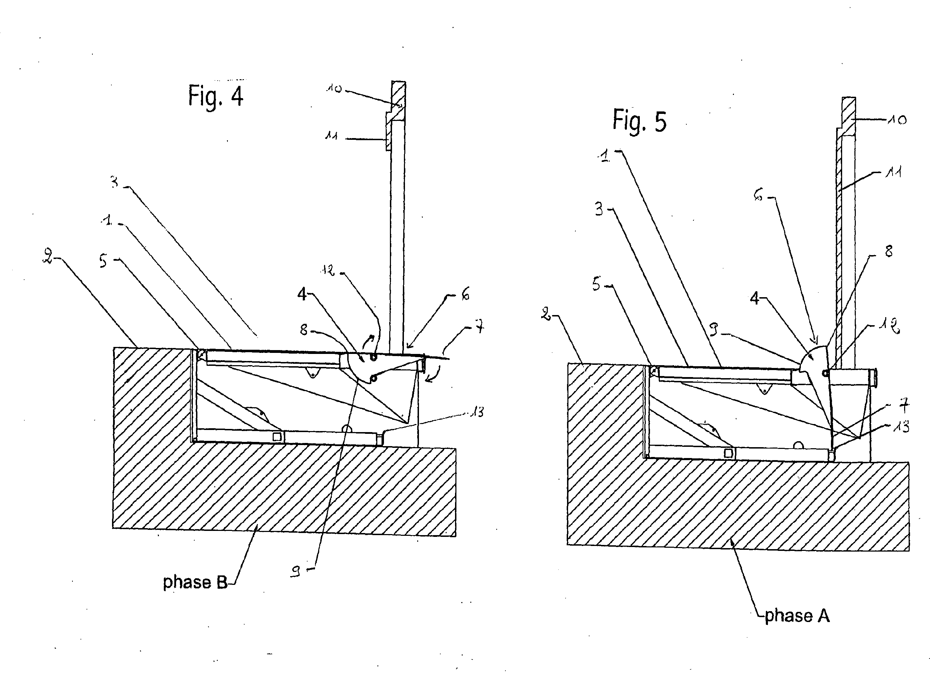

Les figures 4 et 5 représentent vue en coupe le niveleur des figures 1 à 3. Dans cette coupe apparaît la position intérieure de déplacement du niveleur et de ses parties constitutives placées sous la rampe 3.

Figure 4, en position travail, la face 7 est en prolongement de la rampe 3 et permet la circulation des chariots. La face 9 se trouve cachée à l'intérieur du creux formé sous le niveleur. L'axe 12 de pivotement de la portion d'extrémité 4 se situe à l'intérieur de la porte et de son embrasure ou cadre 10 pour la fermeture du quai. La face 7 d'extrémité pivote vers le bas ; ainsi la face 9 pivote vers le haut autour de l'axe 9.

Une butée 13 placée en position basse du niveleur arrête l'extrémité de la face 7 en position verticale à l'emplacement prévu au repos représenté figure 5.

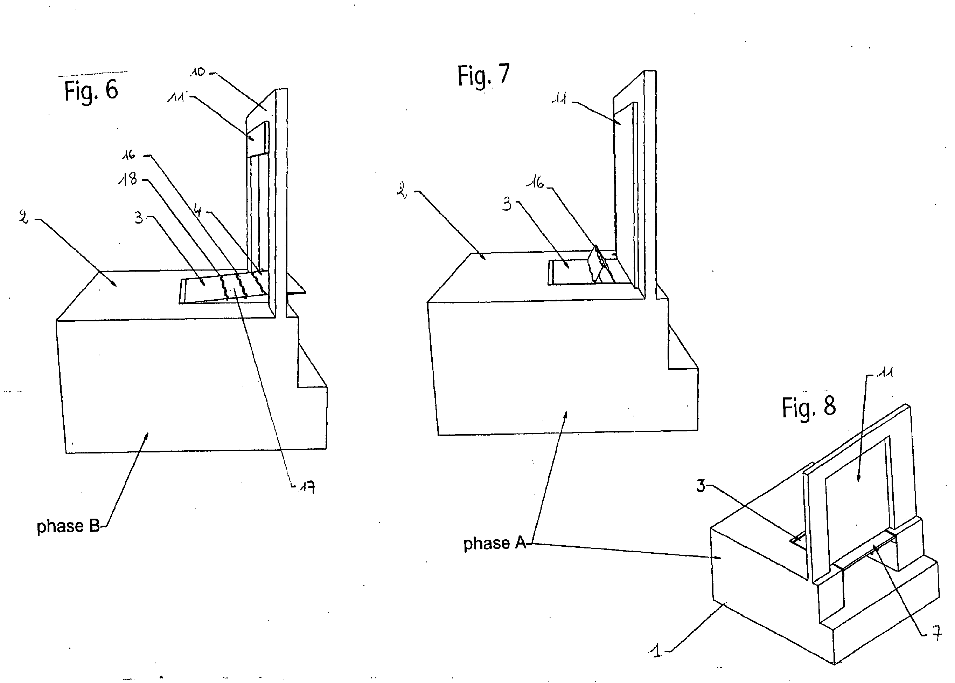

Une variante de réalisation du niveleur selon l'invention est représenté figure 6.

Les références d'éléments identiques à ceux représentés sur les figures précédentes sont conservés. Les éléments ou pièces nouveaux par rapport aux figures 1 à 5 seront référés suivant de nouveaux nombres.

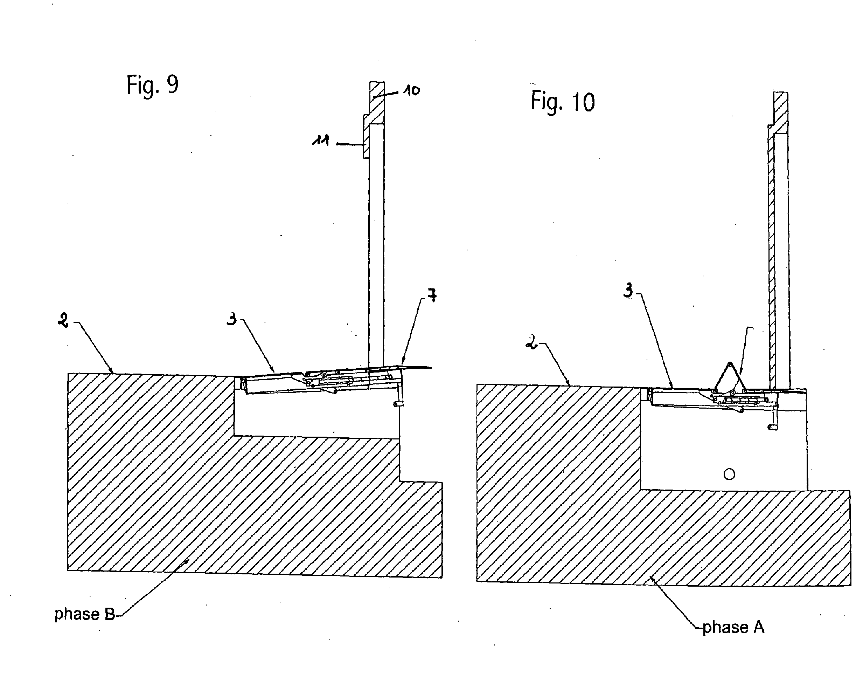

Les figures 9 et 10 représentent en coupe, respectivement en position travail et en position repos et sécurisé, les niveleurs dans la variante représentée figures 6 à 8. La vue en coupe figure 9 permet de représenter l'alignement des charnières 14, 16 et 18 avec l'articulation et l'axe 12 de la rampe. Le niveleur est pivoté sur l'axe 12 pour permettre d'atteindre le niveau du plateau du véhicule à charger.

Ainsi, les faces plates se retrouvent en prolongation les unes par rapport aux autres dans un plan qui permet au chariot élévateur de rouler pour le chargement et le déchargement des véhicules.

En position repos, face plate 7 repliée par coulissement, la charnière 16 se retrouve soulevée sous l'effet du pivotement des deux faces plates 15 et 17 et du rapprochement des charnières 14 à 18 formant la base d'une barrière résultant du rapprochement de la portion d'extrémité 4 par rapport à l'axe 12 et sécurisant le volet 11 et le niveleur en interdisant au chariot élévateur voire aux pieds des opérateurs qui chargeraient manuellement d'atteindre le volet de la porte fermée.

Sur cette figure 11, la porte est représentée en position ouverte, le volet 11 étant relevé. La portion d'extrémité 4 dépasse de la porte en direction du véhicule à charger et ceci présentant l'extrémité d'une rampe montante pour le chargement. La charnière supplémentaire 14 apparaît comme jonction de la face plate supplémentaire à la face 7.

Cette charnière 14 relie la face 7 à une deuxième face plane de circulation 15 elle-même reliée par une nouvelle charnière 16 reliant la première face de la rampe permettant l'accès au quai fixe.

Dans cette variante de réalisation, la rampe forme aussi une barrière en position repos représentée figure 7. La portion d'extrémité est coulissée vers le quai (2) et rentre à l'intérieur de la porte dont le volet 11 peut être rabattu. La charnière centrale 16 se soulève entraînant un pivotement des deux plaques 15 et 17 se dirigeant vers la position verticale. Ainsi les plaques 15, 17 forment la barrière limitant la circulation des chariots élévateurs sur le niveleur.

Comme représenté figure 8, l'accès à la partie intérieure du niveleur reste ouvert La face plane 7 reste horizontale et la face 15 formant le dos de la face 17 se situe en position verticale ou barrière pour arrêter les chariots élévateurs et protéger du même coup le volet de la porte 11 d'éventuels accidents.

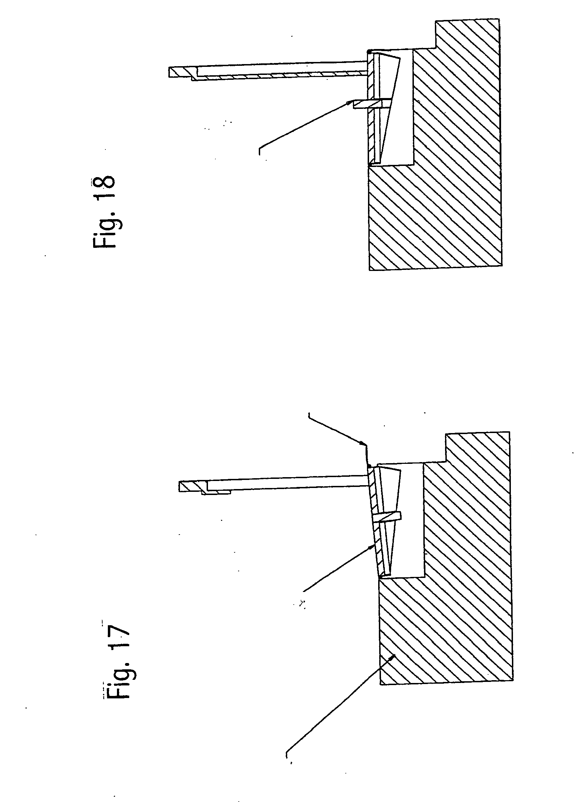

Les figures 11 à 18 représentent le niveleur selon l'invention dans lequel a été ajouté une barrière 19 supplémentaire.

Une rainure 20 a été aménagée transversalement à la rampe de chargement, parallèle à la porte et en retrait de celle-ci pour laisser le mécanisme basculant de l'extrémité extérieure 4 libre dans son fonctionnement ou en variante de le supprimer. Cette rainure 20 forme un logement qui traverse la rampe et dans laquelle est disposé verticalement un panneau 21. En position travail, le panneau 21 est enfoncé de manière à affleurer et fermer la rainure 20 pour maintenir libre la surface de roulage des chariots élévateurs. Ainsi, la tranche supérieure du panneau 21 constitue une partie de la rampe 3.

Figure 11, les chariots montent, la rampe étant légèrement inclinée vers le haut, le volet 11 de la porte vers l'extérieure du quai 2 est ouvert.

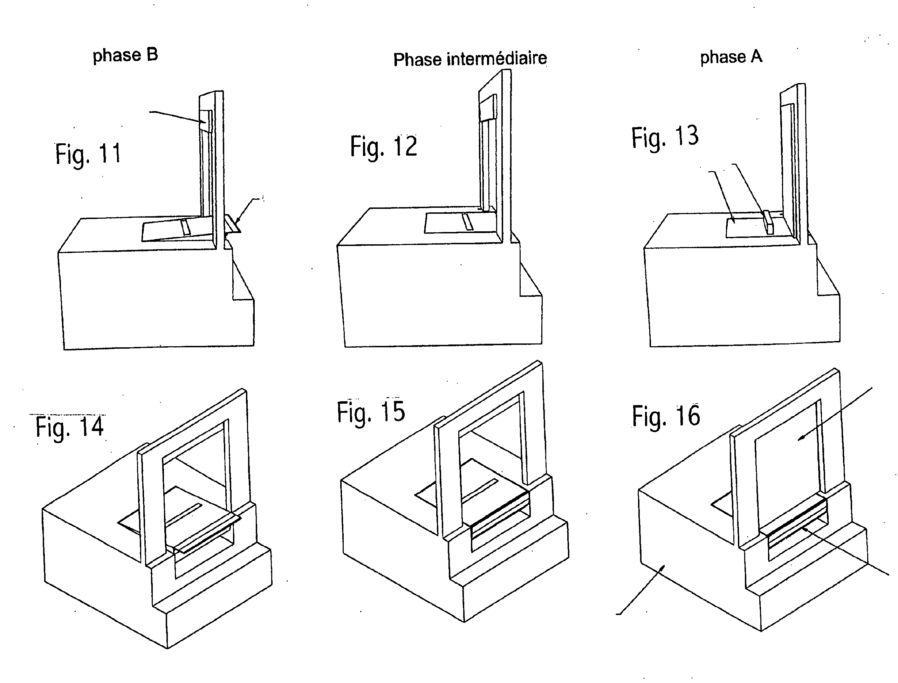

Figure 12, la rampe 3 est abaissée à l'horizontale pour charger des véhicules qui présentent leur plateau à une hauteur identique à celle du quai 2, le volet 11 de la porte est encore ouvert, ainsi que sur la figure 14. En étape suivante, pour la fermeture la portion d'extrémité est rabattue de manière identique à la représentation figure 2 et figure 15, puis le volet 11 est fermé, tiré vers le bas. Dans cette variante de réalisation, le panneau 21 est relevé et forme une barrière horizontale avant la porte et son volet de fermeture 11. Ainsi, ce panneau 21 forme une barrière parallèle à la porte tel que représenté figure 13 ou en coupe figure18.

Bien que l'invention ait été décrite en liaison avec des structures particulières, elle n'y est nullement limitée et on peut y apporter de nombreuses variantes.

Les combinaisons des différentes réalisations représentées sur les dessins ou décrites ci-dessus ne sortent pas du cadre de l'invention.

### Signes de référence

- 1.: niveleur hydraulique
- 2.: quai de chargement
- 3.: rampe
- 4.: extrémité extérieure
- 5.: axe de pivotement de la rampe
- 6.: dispositif mobile
- 7.: face plate
- 8.: extrémité commune des faces 7 et 9
- 9.: face arrondie
- 10.: cadre de la porte
- 11.: volet de fermeture de la porte
- 12.: axe de la portion 4
- 13.: butée
- 14.: charnière
- 15.: face plate
- 16.: charnière
- 17.: face plate
- 18.: charnière
- 19.: barrière
- 20.: rainure
- 21.: panneau

Les signes de référence insérés après les caractéristiques techniques mentionnées dans les revendications ont pour seul but de faciliter la compréhension de ces dernières et n'en limitent aucunement la portée.

## Revendications

1. Niveleur (1) de quai de chargement (2) présentant une rampe basculable hydrauliquement typiquement une rampe hydraulique (3) avec plateforme, la rampe à lèvre mobile présentant une cinématique de fonctionnement suivant lequel la levée ou descente d'extrémité de la plateforme est assurée par un vérin hydraulique, dit vérin principal, après travail dudit vérin principal soit arrivée en bout de course, la pression est dirigée vers un vérin de lèvre qui déplace ladite lèvre mobile afin de l'amener dans le prolongement de la plateforme et de la faire reposer sur le plancher du véhicule à charger ou décharger, **caractérisé en ce que** la rampe à lèvre mobile est articulée basculante et ladite rampe présente un dispositif mobile pouvant passer d'une position relevée à une position escamotée et situé à une portion d'extrémité (4) de ladite rampe (3) côté véhicule à charger, ledit dispositif comprenant une première face longitudinale plate (7) mobile formant ladite lèvre de prolongation de la plate-forme et dudit quai (2) en position de travail ou chargement de véhicule, ladite première face longitudinale plate (7) étant liée par sa première extrémité (8) à une deuxième face longitudinale mobile (9, 17) formant une barrière en position repos, l'actionnement du dispositif mobile situé en portion d'extrémité (4) du niveleur (1) plaçant la deuxième face (9, 17) en position de barrière anti-chute en position repos, le déplacement en sens opposé de ladite portion d'extrémité (4) escamotant la deuxième face barrière (9, 17) à l'intérieur du niveleur (1) et plaçant la première face plate (7) en prolongation du niveleur vers le plateau du véhicule en position travail.

2. Niveleur hydraulique (1) selon la revendication 1, dans lequel la deuxième face longitudinale (17) ou axiale est plate et forme une barrière en positon repos relié pivotante à la première face plate (7) par une charnière (16) et une face plate intermédiaire (15).

3. Niveleur hydraulique selon la revendication précédente, dans lequel la rampe est constituée par au moins quatre panneaux reliés bout à bout par au moins trois charnières successives (14, 16, 18), le panneau d'extrémité (7) en position travail déployant l'ensemble des quatre panneaux à l'horizontal, la rentrée du panneau d'extrémité vers le quai (2) relevant la charnière centrale (16) et les deux panneaux intermédiaires sous forme de barrière.

4. Niveleur hydraulique (1) selon la revendication 1, dans lequel ladite deuxième face longitudinale (9) ou axiale suivant une portion de cylindre forme une barrière arrondie en positon repos, ladite face plate (7) étant disposée confondue à une coupe longitudinale du cylindre théorique prolongeant la face partiellement cylindrique et passant par l'axe dudit cylindre, le pivotement sur ledit axe de la portion d'extrémité (4) du niveleur (1) plaçant la première face plate (7) en position verticale de prolongation du quai de chargement (2) et la face arrondie (9) en position de barrière anti-chute en position repos, le pivotement en sens opposé de ladite portion d'extrémité (4) escamotant la face cylindrique barrière (9) à l'intérieur du niveleur (1) et plaçant la première face plate (7) en prolongation du niveleur vers le plateau du véhicule (position travail ou chargement).

5. Niveleur selon l'une quelconque des revendications précédentes, incorporant une barrière escamotable et relevable automatiquement sous l'effet d'un vérin asservi à une chaîne de sécurité avec par exemple détecteur sur porte et ou cale de camion.

6. Niveleur selon l'une des revendications 1 à 4, incorporant une barrière escamotable relevable sous l'effet d'un vérin actionné par une commande indépendante.

7. Niveleur selon l'une quelconque des revendications précédentes, réalisé en une structure métallique constituée de tôle et de profilés formant nervures.

8. Utilisation d'un niveleur présentant une rampe de chargement munie d'un dispositif escamotable conforme à celui de l'une quelconque des revendications précédentes pour former barrière de quai prévenant les chutes de chariot élévateur.
